(19) Europäisches Patentamt / European Patent Office / Office européen des brevets

(11) **EP 2 127 120 B1**

(12) **EUROPEAN PATENT SPECIFICATION**

(45) Date of publication and mention
of the grant of the patent:
**19.06.2013   Bulletin 2013/25**

(21) Application number: **07819395.0**

(22) Date of filing: **29.10.2007**

(51) Int Cl.:
*H04B 5/02* *(2006.01)*          *H04B 17/00* *(2006.01)*
*G06K 7/00* *(2006.01)*          *G01S 5/02* *(2010.01)*
*G01S 13/87* *(2006.01)*

(86) International application number:
**PCT/EP2007/009352**

(87) International publication number:
**WO 2008/113398 (25.09.2008 Gazette 2008/39)**

(54) **METHOD TO DETERMINE A FIELD STRENGTH BY A READER FOR TELEMETRY UNITS**

VERFAHREN ZUR BESTIMMUNG EINER FELDSTÄRKE DURCH EINEN LESER FÜR TELEMETRIEEINHEITEN

PROCEDE PERMETTANT DE DETERMINER UNE INTENSITE DE CHAMP AU MOYEN D'UN LECTEUR POUR DES UNITES DE TELEMESURE

(84) Designated Contracting States:
**AT BE BG CH CY CZ DE DK EE ES FI FR GB GR HU IE IS IT LI LT LU LV MC MT NL PL PT RO SE SI SK TR**

(30) Priority:  **21.03.2007   EP 07005789**

(43) Date of publication of application:
**02.12.2009   Bulletin 2009/49**

(73) Proprietor: **Ingecom Sàrl**
**2520 La Neuveville (CH)**

(72) Inventors:
• **DESJEUX, Olivier**
**CH-2525 Le Landeron (CH)**
• **RUSCA, Eric**
**CH-2525 Le Landeron (CH)**

(74) Representative: **Kley, Hansjörg**
**Siemens Schweiz AG**
**Intellectual Property**
**Freilagerstrasse 40**
**8047 Zürich (CH)**

(56) References cited:
**WO-A1-2005/091013      US-A1- 2006 114 104**
**US-B1- 6 950 009**

**Description**

This invention relates to a method to determine a field strength by a reader for telemetry units such as active or passive tags according to the preamble of claim 1.

The present invention covers the field of portable RFID-devices as active tags or passive tags. A typical RFID-System is disclosed in WO 1996/028941 A1 [1], especially of «active tags». The present invention covers also the implementation on passive tags, especially on UHF tags where very long distance of communication can be achieved, and thus, determining the distance from tag to reader may be a very useful information.

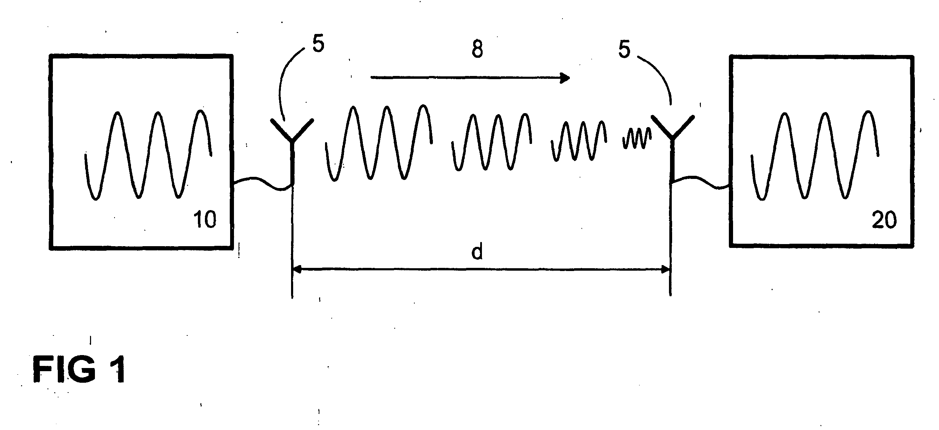

Many applications involving the usage of telemetry require having information of distance to the reader from which it is in sight in order to provide some means for localization. In the radio-frequency domain, the distance information is an image of the amplitude of the electrical field received. The path loss, or attenuation needs to be calculated differently in open space or in confined environment. The involved principle is depicted in figure 1. This attenuation or Free space loss is calculated using the following formula:

$$A = (-27.6) + 20 \cdot \text{Log } f + 20 \cdot \text{Log } d$$

where

- A is the free space loss, in [dB];
- f is the RF frequency in [MHz];
- d is the distance between the transmitting and receiving antennas in meter [m].

At f = 2.4 GHz, the above mentioned formula becomes to A = 40 + 20 Log d

When the RF signal passes through solid objects, some of the signal power is absorbed. The most convenient way to express this is by adding an allowed loss to the Free Space loss. Attenuation can vary greatly depending upon the structure of the object the signal is passing through. Metal or concrete in the barrier greatly increases the attenuation. Walls account for 10 to 15 dB depending upon the construction. Interior walls are on the low end and exterior walls create more loss. Floors of buildings account typically for an extra 12 to 27 dB of loss.

Considering a transmission at 2.4 GHz, the attenuation in building typically becomes

$$A = 40 + 10 \cdot n \cdot \text{Log } d + (\text{Structure Loss})$$

where n is a factor to model the effect of scattering.

The scattering effect comes when the radiation is forced to deviate from its direct trajectory due to non-uniformities of the medium through which it passes. RF scattering involves some change in the energy of the radiation. The n factor is very difficult to predict and may vary substantially in the real life due to the physical modification of the area in which the radio transmission takes place such as movement of people, movement of objects.

In a different embodiment, the distance calculator is based on the measure of the phase shift related to the frequency shift, as described in patent WO2005/091013 [4].

In the case of confined areas the multipath of the travelling wave is much more difficult to predict. Several models are available, typically like the Rayleigh model. The purpose of this invention is to provide an image of the distance by knowing the value of the amplitude of the field received on the receiving section. This information is often abbreviated by the term RSSI, for Received Signal Strength Indication. The state of the art to provide the RSSI on the receiver of the reader is typically a diode detector connected on the analogue intermediate frequency signal. In some cases the chipset used to make the receiver of the reader doesn't provide either the RSSI or the analogue intermediate frequency. Therefore, building a field detector implies to use extra hardware on the RF section of the receiver in order to get this information. Building an RSSI on the RF section of the receiver is a difficult operation that may alter the performance of the overall system.

The object of the present invention is to overcome the problems presented by the above cited devices to provide a method to determine a field strength by a reader without having extra hardware on its radio section.

This object is solved by a method with the steps specified in claim 1 and a tag specified with the features given in claim 7.

Further advantageous embodiments are given in dependant claims.

One of the main applications and use of this method is for the distance detection/distance deduction/distance measuring of tags, mainly active tags. Passive tags can also benefit from this invention.

Another application, immediately derived, is the localization of tags. The purpose of this invention is to localize mobile tags inside a confined area.

The invention will be now described in a preferred embodiment with reference to the accompanying drawings wherein:

Figure 1      Situation of a typical path loss between transmitter/tag and receiver/reader;

Figure 2      principle of a step transmission sent by a tag;

Figure 3      Simplified representation of a circuitry enabling different output powers for an active tag;

Figure 4      Simplified representation of a circuitry according to the state of the art for a passive tag;

Figure 5      Simplified representation of a circuitry enabling different output powers according to the invention for a passive tag;

Figure 6      involved components for detection of a position.

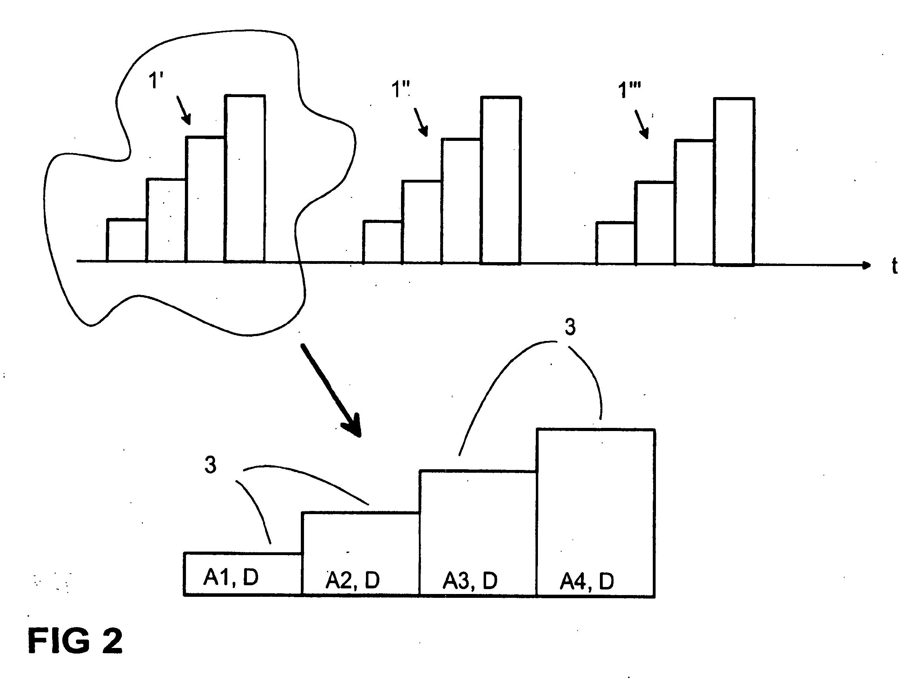

The telemetry unit, i.e. the transmission section of a tag, is sending a message with different amplitudes in its frame. This transmission with different amplitudes is called a step transmission or transmission in form of a step function. An example of this transmission is depicted in figure 2. Each of the portions or in this paper called steps 3 of the frame 1', 1'' or 1''' has a different amplitude. Within one frame the amplitude of the sequence of steps 3 is strongly increasing. The value of the amplitude A1, A2, A3, A4 sent is digitally coded inside the corresponding step 3 of the frame 1, together with the data D to be sent, see the representation in the lower part of figure 2. The data D is therefore repeated by the number of steps 3 included inside the step sequence. The number of steps 3 of one frame is not limited to the value 4 given in figure 2. The amplitude and the Data are denoted by payload of a step.

The receiving unit - part of a reader 20 - receives the step signal - sometimes also called chirp signal - of the telemetry unit - part of a tag 10 - and decodes its digital portion. The digital portion of the step 3 contains the value A1, A2, A3, A4 of the amplitude. The minimum value of the amplitude decoded provides an indication of the distance to which the telemetry unit is transmitting the RF signal. In other word: The reader decodes the first understandable step 3 of the sequence to determine the amplitude of the power required by the telemetry unit to be in range of the reader, and therefore can deduct a distance. If the reader is placed at a distance such as the attenuation of the path loss only allows to receive the sequence ..., ..., [A3, D], [A4, D] the reader detects the information that amplitude of transmission A1 and A2 sent by the tag are not enough to cover the path loss brought by the distance and/or scattering effect and multipath loss. Therefore the distance from reader to tag is estimated to be at a reduced distance as compared to if the reader was able to decode the full step function sequence from A1 to A4.

The realization on tag will be described for an active and a passive tag:

i) The case of the active tag is described by a way to implement the digital step transmission, for better understanding, as an example. Other realizations are also possible.

ii) For the case of the passive tag first is given a circuitry according to the state of the art without step transmission. The invention describes a way to implement the step transmission also on a typical UHF passive tag.

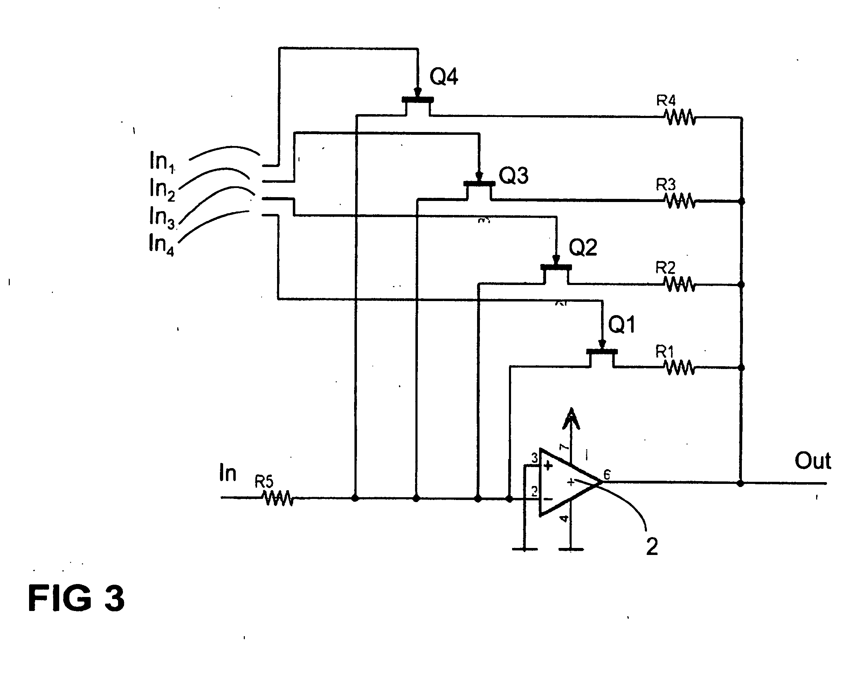

For an active tag - see figure 3 - the telemetry unit is fitted with a power amplifier 2. The gain of the power amplifier 2 is determined by the feed-back loop of the counter-reaction. The value of this counter-reaction can be digitally determined by the combination of the FET transistor Q1, Q2, Q3, Q4 which is switched ON or OFF; this is shown in a simplified representation according to figure 3. The microcontroller unit determines the output power with the combination of $In_1$, $In_2$, $In_3$, $In_4$ switched on or off.

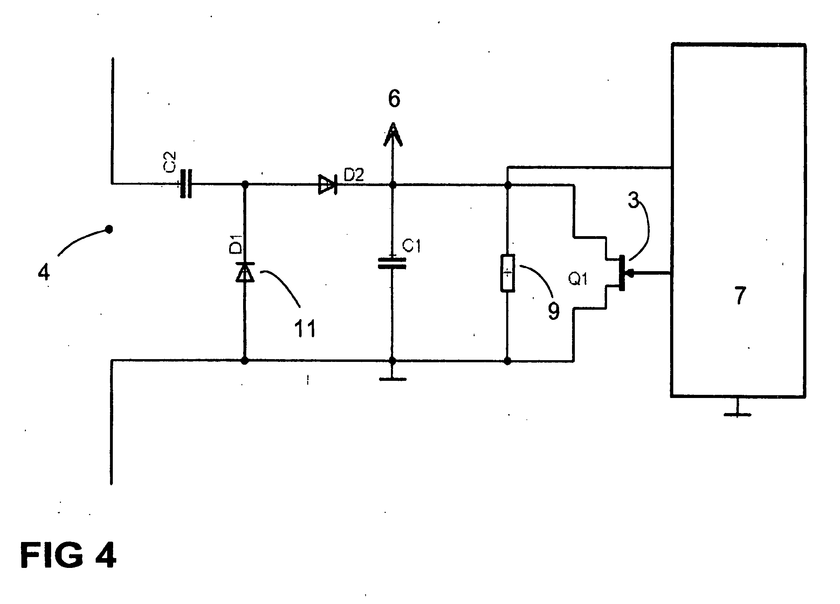

For a passive tag the amplitude of the transmission is based on the amount of RF energy reflected by the antenna 4, details see figure 4. The amount of reflection is a function of the mismatch of impedance done by the modulating transistor during the modulation. The RF energy received on the dipole antenna 4 is rectified by the equivalent charge pump C1,D2,C2,D1 to produce a virtual battery as described in patent application EP 1 645 994 A1 [3]. The virtual battery powers up the logic, which activates the state machine of the tag. Upon decision of this state machine, a modulating message is sent to the transistor Q1. The digital transistor Q1 brings the equivalent of a short circuit to the impedance seen by the antenna 4 at a rate given by the modulation sent by the state machine. For most designs, as the maximum amount of reflection is required, a transistor with very large W/L ratio is used in order to bring an impedance as close as possible to the short circuit during modulation. W/L is the width to length ratio of the transistor. The higher the ratio the higher the current can flow inside the drain of the transistor. The limiter 10 doesn't have any function in this application.

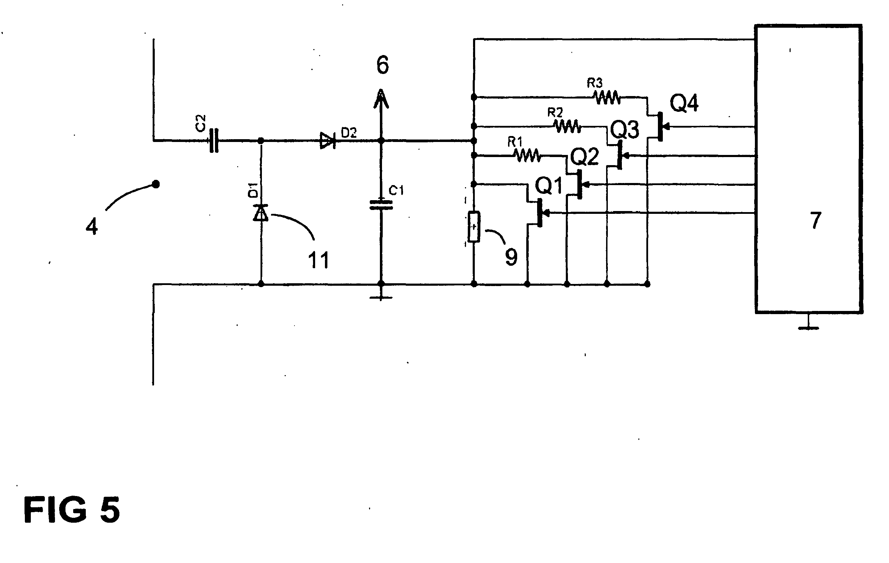

An embodiment of a circuitry carrying out a step transmission according to the invention is depicted in figure 5 for a passive tag. The logic 7 has control over which of the transistor FET to shut during the modulation. The resistors R1, R2, R3 are a typical representation of a single transistor with variation over the W/L ratio. The pair R3-Q4 has higher impedance than the pair R2-Q3, which has higher impedance than the pair R1-Q2, itself having higher impedance than the single Q1. Therefore, the maximum amplitude of reply is given by modulating with all transistors Q1 to Q4 ON. The lowest amplitude of reply is given by modulating Q4 alone.

The message of the modulation carries the information of which transistor is used to do the modulation. Transistor Q4 alone is used for modulation of the transmission with lowest backscatter, so it carries the payload [A1, D]. The table below explains the transistor used for modulation and the payload [Ai, D] sent:

Table: Used transistors and corresponding payloads

| Transistor used | Payload |
|---|---|
| Q4 | [A1, D] |
| Q4 and Q3 | [A2, D] |
| Q4 and Q3 and Q2 | [A3, D] |
| Q4 and Q3 and Q2 and Q1 | [A4, D] |

Position detection

The ultimate goal is to have a position indication of the tag, at least on a floorplan represented by coordinates x,y. This information is provided by setting an array of telemetry receivers (readers) on the surface to monitor. Each tag has a unique digital identification number that can also be called a signature.

For simplicity of understanding, only the 2D representation is given here. The application for localization in volume is the same concept, with a 3D array of readers. The position detection in building is strongly affected by the multipath route of the wave. This multipath effect is highly unpredictable, even if some models tend to describe its behaviour, like the Rayleigh model.

The method for determining the x,y - position of the tag is based, at the first order, on the amplitude of power received by each of the three readers. The x,y - coordinate is located at the geometrical center of the three readers A, B, C. This method is described in the literature as the Nearest Neighbor or K-Nearest Neighbor KNN. The reference of the center of all three readers is measured with one tag placed physically at a known place, preferably the center. The instantaneous reception power is measured with a permanent reference tag and is used as a reference for the measurement of the moving tag. Unlike the teachings in the application WO 2004/073343 [2] which describes a probabilistic model to model the terminal's wireless environment, the presence of a permanent low power tag such as disclosed in the European patent application 07002606.7 allows to have a permanent sampling of the characteristics of the wireless environment. This feature is highly important because the characteristics of the wireless environment is tremendously versatile, depending on the presence of materials or people or any items. So in industrial environment it is believed that only a permanent sampling of the wireless environment is adequate.

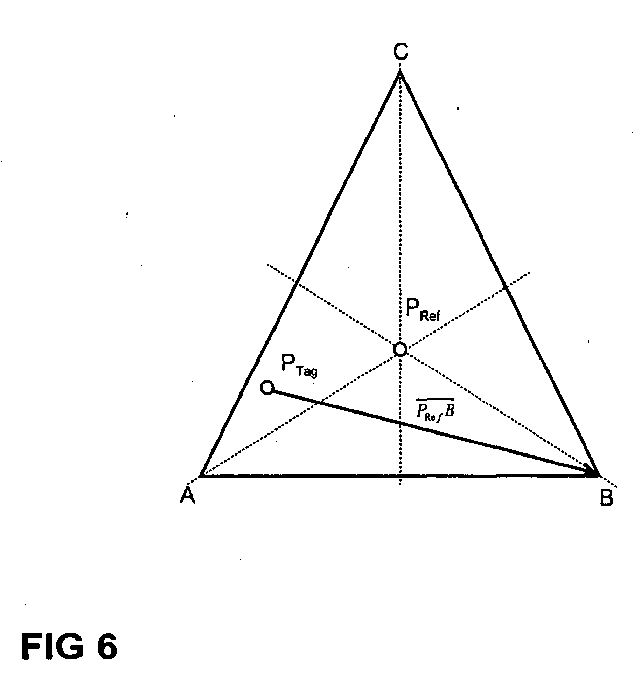

The situation is depicted in figure 6. A minimum of three readers, named A, B, C needs to be in sight of the reference tag $P_{Ref}$. All readers A, B, C are instantly capturing the power of the reference tag $P_{Ref}$. The power measurement of the tag $P_{tag}$ to localize on reader A, B, C is indicated as $\alpha$, $\beta$, $\gamma$. This power measurement is in fact the value indicated by the first power captured by the step sequence, An of the mobile tag. At the same time they are also capturing the power of the tag $P_{tag}$ from which the position is requested. The power measurement of the reference tag $P_{Reg}$ on reader A, B, C is indicated as $\alpha'$, $\beta'$, $\gamma'$, being the first power captured from the step sequence An, where n = 1, 2, ... of the reference tag $P_{REF}$. The difference between the measured position of the reference tag $P_{Ref}$ and its real position gives the offset to determine the exact position of the tag $P_{tag}$ to localize according to the equation:

$$\alpha \cdot \overrightarrow{P_{tag}A} + \beta \cdot \overrightarrow{P_{tag}B} + \gamma \cdot \overrightarrow{P_{tag}C} = -(\alpha' \cdot \overrightarrow{P_{ref}A} + \beta' \cdot \overrightarrow{P_{ref}B} + \gamma' \cdot \overrightarrow{P_{ref}C})$$

In order to have a better precision in the position, especially in logistics environments where the tag $P_{tag}$ is standing still during a long period, the distance measurement can be repeated several times and integrated over the time. Samples of positions can therefore be counted from (1, ..., j). The plot of all the instantaneous samples of power measurement gives an elipsoïde of uncertainty, which can be averaged to provide the user with only one position indication:

$$x = \sum_{J=1}^{k} x_j \quad \text{and} \quad y = \sum_{J=1}^{k} y_j$$

Another way to reduce the uncertainty of measurement is to have more than three readers simultaneously in sight of the same reference tag. The area of the elipsoide of uncertainty is reduced together with the quantity of readers able to capture the power indication of the tag.

A method to reduce the uncertainty of the position is to confirm the x,y - position calculated with three readers, by adjacent readers. This confirmation by adjacent readers is a very good help to reduce the uncertainty brought by the multipath fading in case the quantity of position samples (1, .., j) is very small.

**List of reference numerals**

| | |
|---|---|
| 1 1' 1" 1"" | Step transmission, sequence of steps |
| 2 | amplifier |
| 3 | portion, step of a frame |
| 4 | antenna dipole |
| 5 | antenna gain |
| 6 | virtual battery |
| 7 | logic |
| 8 | path loss |
| 9 | limiter |
| 10 | transmitter, tag |
| 11 | C1, D2, C2, D1 peak to peak rectifier |
| 20 | receiver |
| $\alpha, \beta, \gamma$ | Power derived from mobile tag on the respective reader A,B,C |
| $\alpha', \beta', \gamma'$ | Power derived from reference tag on the respective reader A,B,C |
| A, B, C | Readers |
| A1; A2 ; ...; | An coded amplitude of a step sequence |
| d | distance between transmitting and receiving antenna |
| D | data, content in a step sequence |
| f | frequency |
| KNN | K-Nearest Neighbour |
| In | signal in |
| $In_1, In_2, In_3, In_4$ | binary coding of input signals |
| Out | signal out |
| $\overline{P\ A}$ | vector from the location of a tag to the location of reader |
| $\overrightarrow{P_{Ref}B}$ | vector from the location of a reference tag to the location of a reader |
| $P_{tag}$ | location of a tag |
| $P_{Ref}$ | location of a reference tag |
| Q1, Q2, Q3, Q4 | FET - transistors |

**List of symbols**

| | |
|---|---|
| ISM | Industrial, Scientific and Medical; ISM band |
| RFID | Radio Frequency IDentification |
| RSSI | Received Signal Strength Indication |

UHF    Ultra High Frequency

**References**

[1] WO 1996/028941 A1
«Radio Frequency Idendification System for reliable Communication»
Motorola Inc., Schaumburg, IL 60196 US.

[2] WO 2004/073343 A1
«Location applications for wireless networks» MISIKANGAS, Pauli, Helsinki FI-00940.

[3] EP 1 645 994 A1
«Very high frequency passive transponder, in particular a UHF transponder, with a voltage multiplier or booster at the entry of its logic circuit»
EM Microelectronic Marin SA, 2520 Marin Switzerland

[4] WO2005/0591013 A1
«Multi-resolution object location system and method» Symbol Technologies, Inc, New-York 11742-1300 US.

**Claims**

1. A method to determine a field strength for a communication between a wireless transceiver device (2, 20, A, B, C) and a plurality of wireless identification tags (10);
   where the wireless transceiver device (2, 20, A, B, C) is called a reader (2, 20, A, B, C) and a wireless identification tag (10) is called a tag (10); which tag (10) sends out messages comprising the step of transmitting from a tag messages in form of frames;
   **characterized in that** it further comprises the steps of:

   i) shaping each frame in the form of an amplitude step function (1', 1", 1'''), wherein each step (3) contains the amplitude (A1, A2, ...) and data (D) to be transmitted; and
   ii) determining the minimal field strength of reception at the reader (2, 20, A, B, C), from the corresponding amplitude (A1, A2, ...) of the transmitted step (3), which is indicated by the first decidable step of the sequence received by the reader.

2. Method according to claim 1,
   wherein
   in step ii) from the amplitude (A1, A2, ...) in the first decodable step a distance from the tag (10) to the reader (2, 20, A, B, C) is deducted.

3. Method according to claim 1,
   wherein
   in step ii) the distance d from the tag (10) to the reader (2, 20, A, B, C) is calculated via the formulae

$$A = (-27.6) + 20 \cdot \text{Log } f + 20 \cdot \text{Log } d$$

   where

   - A is the free space loss, in [dB];
   - f is the RF frequency in [MHz];
   - d is the distance between the transmitting and receiving antennas in meter [m].

4. Method according to claim 2,
   wherein

in step ii) the distance d from the tag (10) to the reader (2, 20, A, B, C) is calculated for a RF frequency in the range of 2.4 GHz via the formulae

$$A = 40 + 20 \cdot \text{Log } d$$

where

- A is the free space loss, in [dB];
- d is the distance between the transmitting and receiving antennas in meter [m].

5. Method according to one of the claims 1 to 4 for determining a position of a tag ($P_{tag}$) within a confined area with at least three readers (2, 20, A, B, C) where the at least three readers (2, 20, A, B, C) are placed within the confined area; **characterised by**

a) each reader (2, 20, A, B, C) determines the field strength with values $\alpha'$, $\beta'$, $\gamma'$ of a reference tag ($P_{Ref}$) placed in the center of the confined area defined by the readers (2, 20, A, B, C)
b) each reader (2, 20, A, B, C) determines the field strength with values $\alpha$, $\beta$, $\gamma$ of the tag ($P_{tag}$) to be localized;
c) further determining the position of the tag (10) to be localized via the equation:

$$\alpha \cdot \overrightarrow{P_{tag}A} + \beta \cdot \overrightarrow{P_{tag}B} + \gamma \cdot \overrightarrow{P_{tag}C} = -(\alpha' \cdot \overrightarrow{P_{ref}A} + \beta' \cdot \overrightarrow{P_{ref}B} + \gamma' \cdot \overrightarrow{P_{ref}C}) \quad (I);$$

where $\overrightarrow{P\ A}$ denotes the vector from a tag ($P_{Ref}$, $P_{tag}$) to a reader (2, 20, A, B, C).

6. Method according to claim 5
**characterised by**
repetition of the steps a) and b) and integration of the values $\alpha'$, $\beta'$, $\gamma'$, $\alpha$, $\beta$, $\gamma$ and use of each integrated value in equation (I).

7. Passive tag for sending out messages in form of frames where each frame (1, 1', 1'', ..) has the form of an amplitude step function and each step (3) contains the amplitude (A1, A2, ...) and data (D) to be transmitted; **characterised in that**

- the passive tag (10) comprises n modulating transistors (Q1, Q2, ..), where n is the number of steps (3) of the amplitude step function (1', 1'', 1'''),
- each modulating transistor (Q1, Q2, ..) being adapted to provide a different amplitude of reflection of the via an antenna (4) incoming RF-energy, and **in that** said passive tag further comprises
- a logic (7) being adapted to control said modulating transistors (Q1, Q2, ..) in order to send a step (3) with its amplitude (A1, A2, ...) and data (D) to be transmitted.

**Patentansprüche**

1. Verfahren zur Bestimmung einer Feldstärke für eine Kommunikation zwischen einer drahtlosen Sender-Empfänger-Vorrichtung (2, 20, A, B, C) und einer Vielzahl von drahtlosen Identifizierungsmarken (10); wobei die drahtlose Sender-Empfänger-Vorrichtung (2, 20, A, B, C) als ein Leser (2, 20, A, B, C) bezeichnet wird und eine drahtlose Identifizierungsmarke (10) als eine Marke (10) bezeichnet wird; wobei diese Marke (10) Nachrichten aussendet, den Schritt des Übertragens von Nachrichten in Form von Rahmen (Frames) von einer Marke aus umfassend; **dadurch gekennzeichnet, dass** es ferner die folgenden Schritte umfasst:

i) Formen jedes Rahmens in der Form einer Amplitudenstufenfunktion (1', 1'', 1'''), wobei jede Stufe (3) die Amplitude (A1, A2, ...) und zu übertragende Daten (D) enthält; und
ii) Bestimmen der minimalen Feldstärke des Empfangs an dem Leser (2, 20, A, B, C) aus der entsprechenden Amplitude (A1, A2, ...) der übertragenen Stufe (3), welche durch die erste decodierbare Stufe der durch den Leser empfangenen Sequenz angegeben wird.

**2.** Verfahren nach Anspruch 1,
wobei
in Schritt ii) aus der Amplitude (A1, A2, ...) in der ersten decodierbaren Stufe eine Entfernung von der Marke (10) zu dem Leser (2, 20, A, B, C) abgeleitet wird.

**3.** Verfahren nach Anspruch 1,
wobei
in Schritt ii) die Entfernung d von der Marke (10) zu dem Leser (2, 20, A, B, C) über die Formel

$$A = (-27,6) + 20 \cdot Log\ f + 20 \cdot Log\ d$$

berechnet wird, wobei

- A die Freiraumdämpfung ist, in [dB];
- f die Funkfrequenz ist, in [MHz];
- d die Entfernung zwischen der Sende- und der Empfangsantenne ist, in Metern [m].

**4.** Verfahren nach Anspruch 2,
wobei
in Schritt ii) die Entfernung d von der Marke (10) zu dem Leser (2, 20, A, B, C) für eine Funkfrequenz in dem Bereich von 2,4 GHz über die Formel

$$A = 40 + 20 \cdot Log\ d$$

berechnet wird, wobei

- A die Freiraumdämpfung ist, in [dB];
- d die Entfernung zwischen der Sende- und der Empfangsantenne ist, in Metern [m].

**5.** Verfahren nach einem der Ansprüche 1 bis 4 zur Bestimmung einer Position einer Marke ($P_{tag}$) innerhalb eines begrenzten Bereichs mit mindestens drei Lesern (2, 20, A, B, C), wobei die mindestens drei Leser (2, 20, A, B, C) innerhalb des begrenzten Bereichs angeordnet sind;
**dadurch gekennzeichnet, dass**

a) jeder Leser (2, 20, A, B, C) die Feldstärke mit Werten $\alpha'$, $\beta'$, $\gamma'$ einer Referenzmarke ($P_{ref}$) bestimmt, die in der Mitte des begrenzten Bereichs angeordnet ist, der durch die Leser (2, 20, A, B, C) definiert ist;
b) jeder Leser (2, 20, A, B, C) die Feldstärke mit Werten $\alpha$, $\beta$, $\gamma$ der zu lokalisierenden Marke ($P_{tag}$) bestimmt;
c) ferner die Position der zu lokalisierenden Marke (10) über die Gleichung

$$\alpha \cdot \overrightarrow{P_{tag}A} + \beta \cdot \overrightarrow{P_{tag}B} + \gamma \cdot \overrightarrow{P_{tag}C} = (\alpha' \cdot \overrightarrow{P_{ref}A} + \beta' \cdot \overrightarrow{P_{ref}B} + \gamma' \cdot \overrightarrow{P_{ref}C}) \qquad (I);$$

bestimmt wird, wobei $\overrightarrow{P\ A}$ den Vektor von einer Marke ($P_{ref}$, $P_{tag}$) zu einem Leser (2, 20, A, B, C) bezeichnet.

**6.** Verfahren nach Anspruch 5,
**gekennzeichnet durch**
Wiederholung der Schritte a) und b) und Integration der Werte $\alpha'$, $\beta'$, $\gamma'$, $\alpha$, $\beta$, $\gamma$ und Verwendung jedes integrierten Wertes in Gleichung (I).

**7.** Passive Marke zum Aussenden von Nachrichten in Form von Rahmen (Frames), wobei jeder Rahmen (1, 1', 1", ...) die Form einer Amplitudenstufenfunktion hat und jede Stufe (3) die Amplitude (A1, A2, ...) und zu übertragende Daten (D) enthält; **dadurch gekennzeichnet, dass**

- die passive Marke (10) n Modulationstransistoren (Q1, Q2, ...) umfasst, wobei n die Anzahl der Stufen (3) der Amplitudenstufenfunktion (1', 1", 1''') ist;
- jeder Modulationstransistor (Q1, Q2, ...) dazu eingerichtet ist, eine andere Amplitude der Reflexion der über eine Antenne (4) ankommenden Funkfrequenzenergie zu liefern;

und dadurch, dass die passive Marke ferner umfasst:

- eine Logik (7), die dazu eingerichtet ist, die Modulationstransistoren (Q1, Q2, ...) zu steuern, um eine Stufe (3) mit ihrer Amplitude (A1, A2, ...) und zu übertragende Daten (D) zu senden.

## Revendications

1. Procédé de détermination d'une intensité de champ pour une communication entre un dispositif émetteur-récepteur sans fil (2, 20, A, B, C) et une pluralité d'étiquettes d'identification sans fil (10) ; où le dispositif émetteur-récepteur sans fil (2, 20, A, B, C) est appelé un lecteur (2, 20, A, B, C) et une étiquette d'identification sans fil (10) est appelée une étiquette (10) ; laquelle étiquette (10) envoie des messages comprenant l'étape de transmission à partir d'une étiquette de messages sous la forme de trames ; **caractérisé en ce qu'**il comprend en outre les étapes de :

   i) mise en forme de chaque trame sous la forme d'une fonction d'étape d'amplitude (1', 1", 1'''), dans lequel chaque étape (3) contient l'amplitude (A1, A2, ...) et des données (D) devant être transmises ; et
   ii) détermination de l'intensité minimale de champ de réception au niveau du lecteur (2, 20, A, B, C), à partir de l'amplitude (A1, A2, ...) correspondante de l'étape (3) transmise, qui est indiquée par la première étape décidable de la séquence reçue par le lecteur.

2. Procédé selon la revendication 1,
   dans lequel
   à l'étape ii), à partir de l'amplitude (A1, A2, ...) dans la première étape décodable, une distance de l'étiquette (10) jusqu'au lecteur (2, 20, A, B, C) est déduite.

3. Procédé selon la revendication 1,
   dans lequel
   à l'étape ii), la distance d de l'étiquette (10) jusqu'au lecteur (2, 20, A, B, C) est calculée par l'intermédiaire de la formule

$$A = (-27,6) + 20 \cdot Log\ f + 20 \cdot Log\ d$$

où

   - A est l'affaiblissement en espace libre, en [dB] ;
   - f est la fréquence RF en [MHz] ;
   - d est la distance entre les antennes de transmission et de réception en mètres [m].

4. Procédé selon la revendication 2,
   dans lequel
   à l'étape ii), la distance d de l'étiquette (10) jusqu'au lecteur (2, 20, A, B, C) est calculée pour une fréquence RF dans la plage de 2,4 GHz par l'intermédiaire de la formule

$$A = 40 + 20 \cdot Log\ d$$

où

   - A est l'affaiblissement en espace libre, en [dB] ;
   - d est la distance entre les antennes de transmission et de réception en mètres [m].

**5.** Procédé selon l'une des revendications 1 à 4 pour déterminer une position d'une étiquette ($P_{tag}$) à l'intérieur d'une zone confinée avec au moins trois lecteurs (2, 20, A, B, C), où les au moins trois lecteurs (2, 20, A, B, C) sont placés à l'intérieur de la zone confinée ;
**caractérisé par**

a) chaque lecteur (2, 20, A, B, C) détermine l'intensité de champ avec des valeurs $\alpha'$, $\beta'$, $\gamma'$ d'une étiquette de référence ($P_{Ref}$) placée au centre de la zone confinée définie par les lecteurs (2, 20, A, B, C)
b) chaque lecteur (2, 20, A, B, C) détermine l'intensité de champ avec des valeurs $\alpha$, $\beta$, $\gamma$ de l'étiquette ($P_{tag}$) devant être localisée ;
c) en outre la détermination de la position de l'étiquette (10) devant être localisée par l'intermédiaire de l'équation :

$$\alpha \cdot \overrightarrow{P_{tag}A} + \beta \cdot \overrightarrow{P_{tag}B} + \gamma \cdot \overrightarrow{P_{tag}C} = -(\alpha' \cdot \overrightarrow{P_{ref}A} + \beta' \cdot \overrightarrow{P_{ref}B} + \gamma' \cdot \overrightarrow{P_{ref}C}) \quad (I);$$

où $\overrightarrow{P\ A}$ dénote le vecteur d'une étiquette ($P_{Ref}$, $P_{tag}$) jusqu'à un lecteur (2, 20, A, B, C).

**6.** Procédé selon la revendication 5
**caractérisé par**
la répétition des étapes a) et b) et l'intégration des valeurs $\alpha'$, $\beta'$, $\gamma'$, $\alpha$, $\beta$, $\gamma$ et l'utilisation de chaque valeur intégrée dans l'équation (I).

**7.** Étiquette passive pour envoyer des messages sous la forme de trames, où chaque trame (1, 1', 1", ...) a la forme d'une fonction d'étape d'amplitude et chaque étape (3) contient l'amplitude (A1, A2, ...) et des données (D) devant être transmises ;
**caractérisée en ce que**

- l'étiquette passive (10) comprend n transistors de modulation (Q1, Q2, ...), où n est le nombre d'étapes (3) de la fonction d'étape d'amplitude (1', 1" , 1'''),
- chaque transistor de modulation (Q1, Q2, ...) étant adapté à délivrer par l'intermédiaire d'une antenne (4) une amplitude de réflexion différente d'une énergie RF entrante, et **en ce que** ladite étiquette passive comprend en outre
- une logique (7) étant adaptée à commander lesdits transistors de modulation (Q1, Q2, ...) afin qu'ils envoient une étape (3) avec son amplitude (A1, A2, ...) et des données (D) devant être transmises.

FIG 1

FIG 2

**FIG 3**

FIG 4

FIG 5

FIG 6

## REFERENCES CITED IN THE DESCRIPTION

### Patent documents cited in the description

- WO 1996028941 A1
- WO 2005091013 A
- EP 1645994 A1
- WO 2004073343 A
- EP 07002606 A
- WO 2004073343 A1
- WO 20050591013 A1